(19) Europäisches Patentamt
European Patent Office
Office européen des brevets

(11) Numéro de publication: **0 178 191**
**A1**

# (12) DEMANDE DE BREVET EUROPEEN

(21) Numéro de dépôt: **85400902.4**

(22) Date de dépôt: **09.05.85**

(51) Int. Cl.⁴: **C 08 G 77/48**, C 08 G 77/06

(30) Priorité: **18.05.84 FR 8407725**

(43) Date de publication de la demande: **16.04.86**
**Bulletin 86/16**

(84) Etats contractants désignés: **AT BE CH DE FR GB IT LI LU NL SE**

(71) Demandeur: **RHONE-POULENC SPECIALITES CHIMIQUES, "Les Miroirs" 18, Avenue d'Alsace, F-92400 Courbevoie (FR)**

(72) Inventeur: **Porte, Hugues, 65, rue de Sèze, F-69006 Lyon (FR)**

(74) Mandataire: **Seugnet, Jean Louis et al, RHONE-POULENC RECHERCHES Service Brevets Chimie et Polymères 25, quai Paul Doumer, F-92408 Courbevoie (FR)**

## (54) Résine organosilicique à motifs disilaniques et à propriétés thermomécaniques améliorées et en outre utilisables notamment pour l'hydrofugation du bâtiment.

(57) La présente invention concerne une résine organosilicique à motifs disilaniques, obtenue par cohydrolyse et condensation en milieu solvant hétérogène d'un mélange d'organochlorosilanes et d'organochlorodisilanes, caractérisée en ce que ledit mélange comporte:

a) de 10 à 70% molaire de diorganodichlorosilane de formule $R_2SiCl_2$, les radicaux R identiques ou différents étant choisis parmi les radicaux méthyle et phényle,

b) de 0 à 50% molaire d'un organotrichlorosilane de formule $RSiCl_3$, le radical R ayant la même signification que sous a ci-dessus,

c) de 30 à 70% molaire de méthylchlorodisilanes comportant au moins 30% molaire de tétrachlorodiméthyl-1,2 disilane.

La résine présentant une fonctionnalité comprise entre 2,2 et 3 selon l'invention est utilisable comme poudre à mouler, pour l'hydrofugation des textiles sous forme d'une dispersion aqueuse et pour l'hydrofugation des bâtiments sous forme de solution dans des solvants organiques.

EP 0 178 191 A1

# RESINE ORGANOSILICIQUE A MOTIFS DISILANIQUES ET A PROPRIETES THERMOMECANIQUES AMELIOREES ET EN OUTRE UTILISABLES NOTAMMENT POUR L'HYDROFUGATION DU BATIMENT

La présente invention concerne une résine organosilicique à motifs disilaniques et ayant des propriétés thermomécaniques et hydrofugeantes améliorées, un procédé de préparation de cette résine et son utilisation, notamment comme isolants électriques, poudres à mouler, agents hydrofugeants, notamment pour textiles et plus particulièrement agents hydrofugeants pour les constructions, en particulier pour la maçonnerie et le béton.

Les résines organosiliciques, dont fait partie la résine à motif disilanique selon l'invention, sont des produits connus dont le procédé de préparation est décrit notamment au dernier paragraphe de la page 193 de l'ouvrage de Walter NOLL, Chemistry and Technology of Silicones, Academic Press 2ème édition en langue anglaise de 1968 et dans les brevets U.S. 2.661.348 et 2.449.572.

Selon ce procédé, on effectue une hydrolyse et une condensation simultanées de méthylchlorosilanes et/ou de phénylchlorosilanes, et/ou de méthylphénylchlorosilanes en phase hétérogène en présence d'un solvant organique non miscible ou très légèrement miscible à l'eau présente en excès, ce solvant étant un solvant des silanes de départ et des silanes hydrolysés et condensés. La réaction d'hydrolyse et de condensation est très exothermique et on refroidit donc le mélange réactionnel. Comme solvant, on utilise généralement l'éther diéthylique, l'éther dibutylique, le white spirit, le xylène, le toluène et le trichloroéthylène.

On décante les eaux acides, puis on élimine éventuellement l'acide chlorhydrique par exemple par lavage de la couche organique contenant la résine jusqu'à neutralité, on sèche, puis on élimine éventuellement le solvant.

On obtient ainsi une résine précondensée hydrolysée partiellement, contenant des groupes silanols, qui peut être utilisée telle quelle, puis réticulée à chaud à une température d'environ 200° à 250° C pour les applications telles que poudre à mouler, isolant électrique, etc...

On peut également, dans le cas où l'on veut plus particulièrement utiliser la résine comme agents hydrofugeants pour maçonnerie, isoler la résine du mélange réactionnel sous la forme d'une solution dans ledit solvant organique, diluée généralement à 5 à 15 % en poids et pouvant aller jusqu'à 70 % en poids de résine.

Pour améliorer les propriétés thermomécaniques de ces résines, il est connu de rajouter aux alkylchlorosilanes de départ des phényltrichlorosilanes, comme le phényltrichlorosilane ou le diphényldichlorosilane ou des phénylalkylchlorosilanes comme le phénylméthyldichlorosilane. Ces silanes présentent l'inconvénient majeur d'être beaucoup plus chers que les méthylchlorosilanes provenant du procédé dit de synthèse directe de Rochow décrit notamment dans les brevets U.S. 2.380.995 et 2.488.487 et consistant à faire réagir du chlorure de méthyle sur une masse de contact composée de silicium et de cuivre à une température comprise entre 200 et 500°C.

Au cours de ce procédé, il se forme des polysilanes et en particulier des chlorométhyldisilanes qu'il est difficile de valoriser.

On a déjà proposé dans le brevet français 1.446.520 d'hydrolyser ses sous-produits en l'absence de solvant organique et de les incorporer dans les matériaux de construction.

Dans le brevet français 1.081.726 on décrit la préparation de résines organosiliciques par hydrolyse et condensation de la totalité du résidu brut de la synthèse directe bouillant à 120-170° C ou à partir des fractions individuelles bouillant dans certains intervalles de température. A la page 1, colonne de droite, dernier paragraphe et dans les exemples 2 et 4 de ce brevet, on prévoit l'addition, entre autres, de diméthyldichlorosilane, respectivement à un résidu polysiloxanique bouillant à 152-154° C et à un résidu brut bouillant à 120-170° C.

Les résines obtenues conformément à l'enseignement de ce brevet présentent des difficultés de mise en oeuvre lors de leur application comme hydrofugeant et surtout ne peuvent être obtenues sans éviter l'apparition de microgels, lors de la cohydrolyse. Ces

microgels, insolubles dans les solvants organiques utilisés, bouchent les filtres servant à filtrer les solutions de résines décantées, ce qui constitue un inconvénient majeur, lors de la fabrication industrielle de ces résines. En outre, la présence de ces microgels est une cause évidente de pertes de matières premières, elle perturbe la décantation et en allonge sa durée.

La présente invention a pour but de proposer des résines organosiliciques à motifs disilaniques qui ne présentent pas les inconvénients des résines de l'art antérieur.

Elle a également pour but de proposer des résines organosiliciques à motifs disilaniques qui, tout en présentant des bonnes propriétés hydrofugeantes, présentent en outre des propriétés thermomécaniques élevées.

Elle a également pour but de proposer des résines organosiliciques à motifs disilaniques présentant un taux approprié en silanols.

Elle a également pour but de proposer des résines organosiliciques préparées à partir d'un mélange d'organochlorosilanes, l'organotrichlorosilane apportant le motif T dans la résine pouvant être remplacé en totalité ou en partie par des méthylchlorodisilanes.

Elle a également pour but de proposer des résines organosiliciques n'impliquant pas lors de leur préparation l'apparition de microgels insolubles dans les solvants organiques utilisés lors de l'hydrolyse, riches en motifs T autoréticulés et bouchant les filtres utilisés pour filtrer les résines en solution.

Ces buts et d'autres sont atteints par la présente invention qui concerne en effet des résines organosiliciques à motifs disilaniques, pouvant être obtenues par un procédé comportant la cohydrolyse et la condensation en milieu solvant hétérogène d'un mélange d'organochlorosilanes et d'organochlorodisilanes, ledit procédé étant caractérisé en ce que ledit mélange comporte :

a) 10 à 70 % molaire d'au moins un diorganodichlorosilane de formule $R_2SiCl_2$, les radicaux R identiques ou différents étant

choisis parmi un atome d'hydrogène et parmi les radicaux méthyle et phényle ; de préférence R représente un radical méthyle

b) 30 à 70 % molaire d'au moins un méthylchlorodisilane comportant au moins 30 % molaire de tétrachlorodiméthyl-1,2 disilane $(Cl_2CH_3Si)_2$

et le complément molaire à 100 % est éventuellement effectué par

c) jusqu'à 60 % molaire d'au moins un organotrichlorosilane de formule $R'SiCl_3$, le radical R' ayant la même signification que sous (a) ci-dessus ; de préférence le radical R' représente un radical méthyle ou phényle

et en ce que la résine obtenue présente en outre une fonctionnalité moyenne $\bar{f}$, comme définie ci-après, comprise entre environ 2,2 et 3 inclus, de préférence entre environ 2,6 et 2,9 inclus.

Dans le cas où R et R' sont des radicaux méthyle, on a une résine dite méthyle ayant les propriétés souhaitées.

Dans le cas où R et/ou R' est remplacé au moins en partie par des radicaux phényle, on a une résine dite résine méthyle-phényle d'un coût certes plus élevé, mais présentant de meilleures propriétés thermomécaniques.

Il est possible d'obtenir des résines conformes à l'invention en partant seulement des constituants (a) et (b), le constituant (b) ne pouvant être formé sensiblement que de tétrachloro-diméthyl-1,2 disilane $(CH_3Cl_2Si)_2$.

Toutefois, il est avantageux de ne pas isoler ce produit et d'utiliser directement un mélange de disilanes comportant au moins 80 % molaire d'un mélange de tétrachlorodiméthyl-1,2 disilane $(Cl_2CH_3Si)_2$ et de triméthyltrichloro-1,1,2 disilane $((CH_3)_2\ ClSi-SiCl_2CH_3)$, ce mélange se retrouvant dans les fractions de résidu de distillation de la synthèse directe, distillant entre environ 151 et 155° C, de préférence entre 152 et 154° C, cette dernière comportant en outre de 1 à 15 % molaire de tétraméthyl-dichloro-1,2 disilane $((CH_3)_2ClSi)_2$.

La fraction préférée est celle distillant entre 152 et 154° C et comportant environ 52-57 % molaire de tétrachlorodiméthyl-1,2 disilane, 40 à 41 % molaire de triméthyltrichloro-1,1,2 disilane et

2,5 à 6 % molaire de tétraméthyldichloro-1,2 disilane et de tétraméthyldichloro-1,1 disilane.

Les résines organosiliciques sont constituées pour la plupart de motifs difonctionnels méthylés :

D = 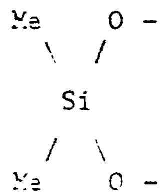

de trifonctionnels méthylés :

T = 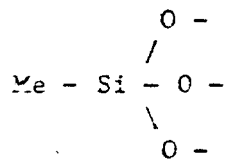

et/ou de trifonctionnels phénylés :

$T^{\phi}$ = 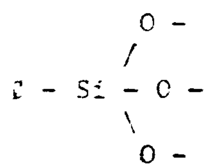

Il est connu que les résines organosiliciques perdent une grande part de leurs propriétés mécaniques aux températures élevées (200-300° C). Pour remédier à ce défaut, il est également connu de mettre en jeu des taux de trifonctionnels T très importants (40 à 95 %). Comme l'aptitude des chaînes siloxaniques à former des cycles (et en particulier des cycles à 4 liaisons - Si - O) est grande, il en résulte une autocondensation des molécules trifonctionnelles sur elles-mêmes provoquant la formation dans le réseau de structures polycycliques "échelles" :

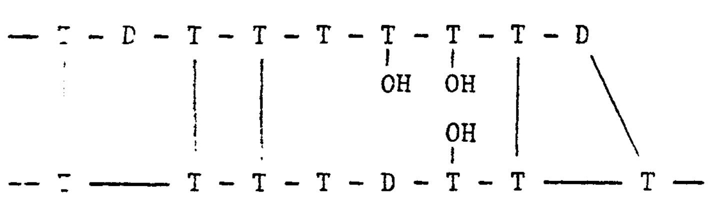

ou cubanes ou pseudo-cubanes

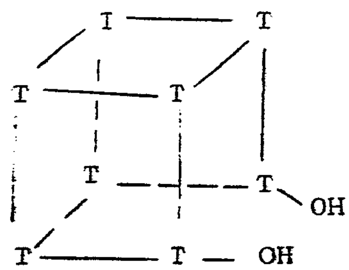

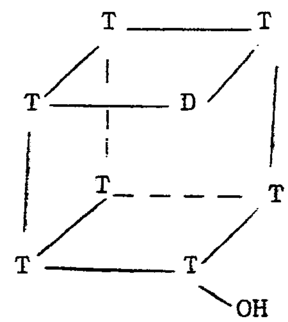

Ces microstructures nuisent à la qualité du produit, car le taux de réticulation effectif est nettement inférieur au degré de réticulation potentiel du réseau. De plus, elles forment une hétérogénéité dans le système sous forme de microgels.

La présente invention a permis précisément de remédier à cet inconvénient en remplaçant tout ou partie des motifs T par des motifs disilaniques comme noeuds multifonctionnels.

On a l'habitude de caractériser les résines silicones par le rapport R/Si (nombre de substituants carbonés par atome de Si). Cette valeur peut-être facilement reliée à la fonctionnalité moyenne du produit car dans ce cas :

$\bar{f} = 4 - R/Si.$

L'emploi de disilanes modifie ce calcul. En effet, les spectres de RMN du $Si^{29}$ montrent que la liaison ≡ Si – Si ≡ est conservée quantitativement au cours de l'hydrolyse. Le motif disilanique se comporte donc comme un élément tri ou tétrafonctionnel tout en conservant des substituants carbonés sur les atomes de silicium.

Trifonctionnel 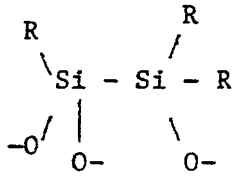

ou tétrafonctionnel

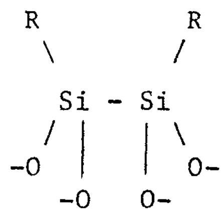

C'est pourquoi, à fonctionnalité moyenne des monomères égale (facteur qui détermine en partie la rigidité du réseau), on a un R/Si plus élevé pour les produits contenant des motifs disilaniques. On donne dans les cas 1 à 3, ci-dessous, un calcul de R et de la fonctionnalité $\bar{f}$ :

<u>Cas 1</u> sans disilane

T = 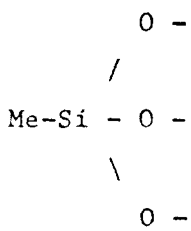 (80 %) D = 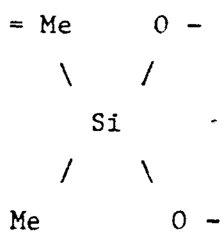 (20 %) en mole

$$\bar{f} = \frac{(80 \times 3) + (20 \times 2)}{100} = 2,8$$

$$R/Si = \frac{(80 \times 1) + (20 \times 2)}{100} = 1,20 = 4-\bar{f}$$

<u>Cas 2</u> avec tétrachlorodiméthyl-1,2 disilane et diméthyldichloro-silane

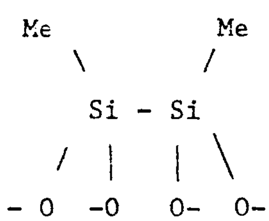 = 40 % et D = 60 % en moles

$$\bar{f} = \frac{(40 \times 4) + (60 \times 2)}{100} = 2.80$$

$$R/Si = \frac{(40x1) + (40x1) + (60x2)}{40 + 40 + 60} = 1.43$$

R/Si est différent de $4-\bar{f}$

Cas 3 avec tétrachlorodiméthyl-1,2 disilane et trichlorotriméthyl-1,1,2 disilane et diméthyldichlorosilane

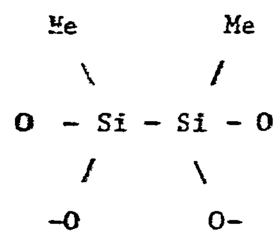

= 30 %

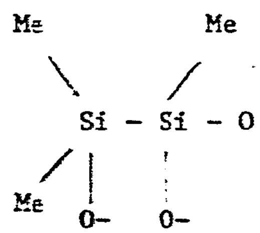

= 20 %

et D = 50 % en moles

$$\bar{f} = \frac{(30x\ 4) + (20x3) + (50x2)}{100} = 2.80$$

$$R/Si = \frac{(30x1) + (30x1) + (20x1)\ (20 \times 1) + (50x2)}{60 + 40 + 50} = 1.47$$

On voit donc que pour augmenter la fonctionnalité de la résine dans la zone recherchée (2,2 à 3, de préférence 2,6 à 2,9), on peut rajouter soit du tétrachlorodiméthyl-1,2 disilane pur ou en mélange avec du triméthyltrichloro-1,2,2 disilane.

Le taux de silanols dans la résine en fin d'hydrolyse est situé entre environ 2 et 8 % en poids d'OH par rapport au poids total de la résine, généralement entre 3 et 6 %. Bien entendu, comme il est bien connu dans la technique des résines, on peut effectuer ce que l'on appelle l'avancement de la résine,

c'est-à-dire une préréticulation par condensation d'une partie des silanols résiduelle en vue d'augmenter la viscosité du produit avant son emploi. Cet avancement peut être notamment effectué par chauffage entre environ 70 et 130° C, de préférence vers 100° C avec élimination de l'eau formée en présence éventuellement d'un catalyseur métallique (généralement de 50 à 500 ppm calculés en équivalent métal, par exemple, un sel de métal de transition). Il est également possible de fonctionnaliser tout ou partie des silanols de la résine par addition, lors de l'hydrolyse, d'un alcool aliphatique en $C_1$-$C_{12}$ tel que l'alcool méthylique, éthylique et butylique ou avec des alkyltrialcoxysilanes et/ou des alcoxysilanes dont la partie alkyle est en $C_1$-$C_{12}$ tel que le méthyltriméthoxysilane, le tétraméthoxysilane et l'éthyltriéthoxysilane.

La présente invention vise également un procédé de préparation de résines conformes à l'invention. Selon ce procédé, mis en oeuvre en continu ou en discontinu on coule le mélange d'organochlorosilanes et -disilanes tels que définis ci-dessus sous atmosphère inerte dans un réacteur contenant l'eau d'hydrolyse en excès et le solvant non miscible ou très peu miscible à l'eau, on maintient la réaction à une température inférieure à 80° C, on décante la phase organique, on élimine l'acidité résiduelle de la phase organique par exemple par lavage à l'eau, cette phase organique étant filtrée et séchée. Selon une variante du procédé de l'invention, on rajoute lors de l'hydrolyse dans le réacteur une quantité adaptée d'alcool aliphatique en $C_1$-$C_{12}$ comme l'alcool méthylique ou éthylique dans le but d'obtenir des motifs alcoxysiloxaniques dans le produit final, par réaction des alcools sur tout ou partie des silanols. La résine sèche peut être récupérée par évaporation sous vide des solvants ou peut être conservée telle quelle ou sous une forme avancée telle que définie ci-dessus en solution plus ou moins diluée dans un solvant organique ou bien sous forme de dispersions aqueuses, suivant ses applications ultérieures. Bien entendu, la résine obtenue peut être préréticulée comme indiqué ci-dessus.

Comme solvant organique utilisé lors de la cohydrolyse, on peut utiliser le toluène, le chlorobenzène, le white spirit, le trichloréthylène, l'éther diéthylique, l'éther diisopropylique ou l'éther dibutylique.

L'éther diisopropylique est le solvant préféré, car c'est le solvant qui permet de prévenir le plus l'apparition de microgels, d'effectuer l'hydrolyse à une température assez élevée de l'ordre de 50° C et conduit à des taux de silanols plus élevés.

L'eau d'hydrolyse et le solvant sont présents de préférence suivant un rapport en volume voisin de 50/50. Par ailleurs, la quantité d'eau est calculée pour avoir une concentration finale en HCl comprise entre 2 et 10 moles par litre dans la phase aqueuse.

Les résines à motifs disilaniques peuvent être utilisées de toute matière connue pour les résines polysiloxaniques et peuvent être réticulées par les catalyseurs classiques qui sont généralement des sels de métaux en général des acylates d'étain, de zinc, de fer ou de titane à une dose comprise généralement entre 30 et 500 ppm, calculés en équivalent métal par rapport au poids de résine sèche.

Elles peuvent être utilisées sous forme de poudre à mouler et dans ce cas, il est souhaitable de les réticuler à une température comprise entre 250 et 350° C, de préférence entre 280 et 320° C. Elles peuvent être utilisées sous forme de dispersions aqueuses contenant éventuellement un catalyseur ci-dessus comme hydrofugeants pour textile ou en solution dans un solvant organique comme hydrofugeant pour les constructions, en particulier pour la maçonnerie et pour les ouvrages en béton, le solvant organique peut être le même que celui utilisé pour la préparation de la résine.

A fonctionnalité moyenne égale, l'utilisation des disilanes dans les résines selon l'invention permet d'augmenter le taux de radicaux alkyle dans la molécule. Cet élément est particulièrement favorable pour les propriétés hydrofugeantes du matériau.

L'emploi de molécules trifonctionnelles et tétrafonctionnelles disilaniques permet de prévenir la formation de microstructures autoréticulées à base de motifs T. Il y a donc très peu de formation de microgels dans l'hydrolysat, on observe alors une meilleure filtration des produits et des lavages de la phase organique plus efficaces et des décantations plus aisées. Ceci est particulièrement appréciable pour la synthèse des produits méthylés de fonctionnalité élevée difficile, voire impossibles à obtenir par cohydrolyse classique de $MeSiCl_3$ et $Me_2SiCl_2$.

Le remplacement au moins partiel du $MeSiCl_3$ par des chlorodisilanes permet d'abaisser le prix de revient des produits, car les disilanes sont des sous-produits de la synthèse directe des méthylchlorosilanes.

L'analyse par RMN du $Si^{29}$ permet d'affirmer que la liaison disilanique se conserve dans la résine finale lors de la cohydrolyse malgré l'acidité importante du milieu.

Les résines en poudre à motifs disilaniques nécessitent une réticulation à environ 300° C pour atteindre leurs propriétés optimales. L'analyse au pendule de torsion à fibres, comme mentionné ci-dessous, indique par rapport aux résines connues, une diminution du module élastique à froid et une augmentation de celui-ci à chaud reflétant par rapport aux résines connues une meilleure réticulation du produit. Ceci est particulièrement net pour les résines méthylées dont le comportement mécanique à chaud (rigidité, stabilité) se rapproche de celui des résines méthyle-phényle de même fonctionnalité moyenne, ce qui permet dans certains cas de substituer certaines résines méthyle-phényle par des produits purement méthylés pour améliorer entre autres les propriétés antiadhérentes sans atténuer la tenue thermique.

En ce qui concerne les propriétés hydrofugeantes, les résines à motifs disilaniques selon l'invention améliorent par rapport aux résines connues trois points importants. L'incorporation de liaisons $\equiv Si - Si \equiv$ permet d'obtenir des produits purement méthylés de fonctionnalité élevée, de forte viscosité tout en

conservant un taux de silanols approprié. A ces trois caractéristiques s'ajoute une quatrième qui est une densité en groupement méthyle relativement élevée malgré la fonctionnalité moyenne pouvant être proche de 3 des résines. Cette dernière caractéristique contribue comme les trois autres à la bonne hydrofugation de surface et au bon effet perlant, comme illustré ci-dessous, pour les résines méthylées à motifs disilaniques.

D'autres avantages et caractéristiques de la présente invention apparaitront à la lecture des exemples suivants donnés à titre illustratif nullement limitatif. Dans tous les tableaux ci-après les % de chlorosilanes sont des % molaires.

Exemple I

On part d'un mélange de chloroorganodisilanes et de chloroorganosilanes ayant la composition suivante (en % molaire) :

- 40 % molaire d'une fraction de résidu de synthèse directe
  . tétrachlorodiméthyl-1,2disilane : 55 %
  . triméthyltrichloro-1,1,2 disilane : 40 %
  . tétraméthyldichloro-1,2 disilane : 5 %
- 0 % de $MeSiCl_3$
- 60 % de $Me_2 SiCl_2$

On coule pendant environ 1 h ce mélange maintenu sous azote sec dans un réacteur de 1 l, muni d'un agitateur et d'un condenseur à reflux, le réacteur contenant du toluène et de l'eau d'hydrolyse (50/50 en volume), la quantité d'eau étant calculée pour obtenir une concentration finale en HCl de l'ordre de 4 moles/l dans la phase aqueuse.

La température de la réaction qui était au début de 20° C est maintenue en dessous de 30° C par un bain eau + glace. On laisse la réaction se poursuivre environ 2 h sous agitation. On décante les eaux acides et on lave la phase organique pour éliminer son acidité résiduelle. On n'observe pas dans l'hydrolysat en solution organique l'apparition de microgels. La phase organique est filtrée et séchée sur $Na_2SO_4$ anhydre. La résine est récupérée par évaporation sous vide des solvants.

Sur la résine obtenue, on détermine le taux de silanols (pourcentage en poids d'OH par rapport au poids total de la résine) en faisant réagir la résine sur du $LiAlH_4$ en excès et on mesure par volumétrie le dégagement d'hydrogène correspondant. On trouve une teneur de 3,6 %.

Exemples 2 à 7

On répète le mode opératoire de l'exemple 1, sauf que l'on modifie le mélange de chlorosilanes à hydrolyser, les caractéristiques sont rassemblés dans le tableau I ci-après.

Exemples 8 à 10

On répète le mode opératoire de l'exemple 1 sauf que l'on utilise du tétrachlorodiméthyl-1,2 disilane pur et du phényltrichlorosilane. Les résultats sont rassemblés dans le tableau II ci après.

Exemples 11 à 16

On répète le mode opératoire de l'exemple 1, sauf que l'on utilise en outre du phényltrichlorosilane. Les caractéristiques sont rassemblés dans le tableau III ci-après.

I - Analyse des propriétés mécaniques

On utilise pour ce faire un pendule de torsion à fibres.

Principe de la mesure.

On imprègne une tresse de fibres de verre (≃ 3000 fibres) avec une solution de résine préparée conformément aux exemples 1 à 16 ci-dessus additionnée éventuellement de catalyseur. Après évaporation et séchage sous vide du composite, on mesure la période et l'amplitude des oscillations du pendule en fonction de la température ou du temps selon la méthode décrite par B. HARTMANN et G.F. LEE "Journal of Applied Polymer Sciences" - 21 (1977) p. 1341.

La période P est reliée à la rigidité relative (RR) de l'échantillon ($RR = \frac{1}{p2}$) elle-même proportionnelle au module élastique $G' = \frac{8\pi\ L\ I}{r^4}$ . RR (L, r et I étant la longueur, le rayon et le momentd'inertie de l'échantillon).

L'amplitude des oscillations fournit la courbe d'amortissement et la variation en fonction de la température du module de perte ($\Delta$) :

. $\Delta = \frac{1}{n} \log \frac{A_r}{A_{r+n}}$

$A_r$ = Amplitude du pic de référence, $A_{r+n}$ = Amplitude du pic après n cycles.

L'analyse comporte trois phases successives une fois la fibre imprégnée par de la résine comportant un catalyseur (300 ppm en équivalent métal) de Zn sous forme d'octoate.

. Première montée en température de - 160 à 250-300° C (température ultérieure de réticulation) avec un $\Delta$ t d'environ 1,5° C/minute.

. Réticulation de la résine en isotherme 250 à 300° C durant 12 h.

. Refroidissement lent à - 160° C et deuxième montée en température jusqu'à 400° C avec $\Delta$ t ~ 1,5° C/minute.

. Le premier passage nous renseigne sur la température de transition vitreuse du produit (Tg).

. $T_{1/2}$ représente la température du point d'inflexion de la courbe RR = f (T) et son écart avec la Tg nous renseigne sur l'hétérogénéité du produit.

. $T_R$ correspond à la température du début de réticulation de l'hydrolysat.

. L'élasticité à chaud ($\Delta$ $RR_{300° C}$ et $\Delta$ $RR_{360° C}$) après réticulation (2ème passage) rend compte de la densité de réticulation efficace du réseau.

A) <u>Résines méthylées</u>

Les valeurs sont portées dans les tableaux IV et VII ci-après.

De l'ensemble des résultats, on retire les informations suivantes :

De manière générale, la Tg augmente lorsque la fonctionnalité du produit augmente et ceci malgré la chute des masses.

L'emploi de motifs tétrafonctionnels au lieu de motifs T comme noeuds de réticulation fait augmenter la Tg.

L'écart entre la Tg et la $T_{1/2}$ reste du même ordre de grandeur : 10 à 15° C sauf pour les produits à forte Tg.

La température du début de réticulation (en présence de 300 ppm de Zn sous forte d'octoate de zinc) ne semble pas influencée par la nature ou la fonctionnalité de la résine. Elle est proche de 130° C comme pour les résines connues.

Lorsque la réticulation est menée à 300° C, le module élastique reste stable entre 300 et 400° C.

Une fois réticulée complètement, on note que la rigidité relative à 300° C croît régulièrement avec la fonctionnalité des produits. Par rapport aux autres résines méthylées connues, les résines à motifs disilaniques présentent un module élastique supérieur de 50 à 100 % à fonctionnalité moyenne des monomères identique.

On peut en conclure qu'il a eu une meilleure utilisation des noeuds potentiels du réseau. Ceci est lié à la nature des noeuds tétrafonctionnels ≡ Si - Si ≡ qui ont moins tendance à s'autocycliser et également à la densité accrue de groupes difonctionnels permettant une meilleure mobilité des chaînes lors de la condensation des silanols résiduels.

Le niveau de rigidité atteint aux températures élevées ($T > 200°$ C) est fort et peut être comparé à celui des résines méthyle-phényle de même fonctionnalité moyenne.

On a représenté la thermoplasticité de cette famille de produits dans le tableau VII en comparant le rapport des rigidités à froid et à chaud des produits.

Par rapport aux résines méthyle classiques connues, les résines à motifs ≡ Si - Si ≡ ont un comportement plus homogène en fonction de la température. Ceci est dû à une diminution de la rigidité à froid accompagnée d'une augmentation de la rigidité à chaud.

B) Résines méthyle-phényle (tableaux V, VI et VIII)

On retrouve les mêmes caractéristiques que pour les résines méthylées.

. augmentation de la Tg avec la fonctionnalité

. les températures de début de réticulation restent voisines de 130° C.

. on observe une réticulation incomplète à 250° C qui disparaît lorsque le produit est traité à 300° C.

. Le module élastique augmente avec la fonctionnalité du produit et à fonctionnalité équivalente le taux de phényle améliore légèrement la rigidité du composite.

En conclusion, le faible écart de propriétés thermomécaniques entre des résines méthyle-phényle et des résines méthylées à motifs disilaniques est à souligner. Les modules élastiques à chaud et les stabilités thermiques (jusqu'à 400° C) sont voisines et comparables aux propriétés des résines méthyl-phényle utilisées pour leurs propriétés thermomécaniques élevées.

II - Mesure des propriétés hydrofugeantes

Elles sont appréciées par la mesure de l'effet perlant. Pour évaluer l'effet perlant, on dépose une goutte d'eau sur un support enduit de résine et on mesure l'angle de goutte ou angle de raccordement entre la goutte d'eau et le support. On prépare une solution de résine à 10 % dans la white spirit dans laquelle on trempe 10 secondes une éprouvette de fibrociment. Après séchage du solvant pendant 8 jours sous hotte, on mesure l'angle de raccordement d'une goutte d'eau déposée sur l'éprouvette. La mesure est faite en plusieurs points du support de façon à minimiser l'influence de la microporosité du substrat qui joue un rôle important surtout pour des angles < 90°.

Les mesures d'angles de goutte ont été effectuées sur des résines à motifs disilaniques. Les valeurs obtenues sont regroupées dans le tableau IX ci-après, qui illustrent des propriétés hydrofugeantes tout à fait satisfaisantes.

Exemples comparatifs 17 à 21

Mis à part les exemples 20 et 21, on suit le même mode opératoire que dans l'exemple 1, sauf qu'on utilise un mélange d'organohalosilane en dehors de l'invention. Les résultats sont rassemblés dans le tableau X ci-après. De ce tableau, il ressort que les résines présentent toutes l'apparition de microgels lors de leur fabrication.

TABLEAU 1

| Exemples | Fonctionnalité et Me/Si | chlorodisilanes % | % $MeSiCl_3$ | % $Me_2SiCl_2$ | Solvant d'hydrolyse | % d'OH en poids | Microgels* |
|---|---|---|---|---|---|---|---|
| 1 | 2,62 1,56 | 40 | 0 | 60 | Toluène | 3,6 | 0 |
| 2 | 2,72 1,51 | 49,5 | 0 | 50,5 | Toluène | 3,1 | 0 |
| 2 bis** | 2,72 1,51 | 49,5 | 0 | 50,5 | Toluène | 4,9 | 0 |
| 3 | 2,72 1,47 | 38,4 | 16,7 | 45,0 | Ether diisopropylique | 5,2 | 0 |
| 4 | 2,77 1,51 | 50 | 0 | 50 | Toluène | 3,0 | 0 |
| 5 | 2,77 1,51 | 50 | 0 | 50 | Ether diisopropylique | 3,5 | 0 |
| 6 | 2,82 1,46 | 57,4 | 0 | 42,6 | Ether diisopropylique | 3,7 | 0 |
| 7 | 2,87 1,45 | 60 | 0 | 40 | Ether diisopropylique | 4,2 | 0 |

* observés en fin d'hydrolyse (filtration)
** hydrolyse à 50° C

TABLEAU II

| Exemples | Fonctionnalité | % $Me_2Si_2Cl_4$ | % $\phi$ $SiCl_3$ | % $Me_2SiCl_2$ | Solvant d'hydrolyse | % d'OH (poids) | R/Si ou $\phi$/Si | Microgels |
|---|---|---|---|---|---|---|---|---|
| 8 | 2,62 | 25 | 12,5 | 62,5 | Toluène | 2,1 | 1,5<br>0,10 | 0 |
| 9 | 2,70 | 10 | 50 | 40 | Toluène | 3,3 | 1,36<br>0,455 | 0 |
| 10 | 2,82 | 18,2 | 45,5 | 36,4 | Toluène | 3,7 | 1,31<br>0,385 | 0 |

TABLEAU III

| Exemples | Fonctionnalité | % Chlorodisilanes | % $\phi$ $SiCl_3$ | % $Me_2SiCl_2$ | Solvant d'hydrolyse | % d'OH | R/Si et $\phi$/Si | Microgels |
|---|---|---|---|---|---|---|---|---|
| 11 | 2,64 | 25 | 25 | 50 | Toluène | 4,8 | 1,4<br>0,20 | 0 |
| 12 | 2,73 | 20,1 | 39,6 | 40,2 | Toluène | 5,7 | 1,33<br>0,33 | 0 |
| 13 | 2,82 | 51,4 | 7,3 | 41,3 | Toluène | 3,2 | 1,27<br>0,048 | 0 |
| 14 | 2,82 | 32,3 | 32,3 | 35,5 | Toluène | 5,1 | 1,27<br>0,244 | 0 |
| 15 | 2,82 | 31,3 | 36,5 | 32,3 | Toluène | 3,6 | 1,25<br>0,278 | 0 |
| 16 | 2,82 | 24,2 | 46,8 | 29,0 | Toluène | 5,7 | 1,23<br>0,377 | 0 |

TABLEAU IV

| Exemples | Fonctionnalité | % OH | $T_g$ (° C) | $T_{1/2}$ (° C) | $T_R$ (° C) | Isotherme (° C) | Δ RR.$10^2$ 300° C | Δ RR.$10^2$ 360° C |
|---|---|---|---|---|---|---|---|---|
| 1 | 2,62 | 3,6 | - 37 | - 20 | 140 | 300 | 2,0 | 2,0 |
| | | | - 41 | - 27 | 150 | 250 | 0,95 | 1,8 |
| 2 | 2,72 | 3,1 | - 40 | - 29 | 145 | 250 | 1,15 | 1,95 |
| 3 | 2,72 | 5,2 | - 26 | - 17 | 130 | 300 | 2,8 | 2;8 |
| 4 | 2,77 | 3,0 | 0 | 14 | 130 | 300 | 2,6 | 2,55 |
| | | | 0 | 12 | 130 | 250 | 1,25 | 2,40 |
| 5 | 3,5 | 3,5 | - 22 | - 12 | 130 | 300 | 2,45 | 2,30 |
| | | | - 27 | - 14 | 220* | 250* | 1,30 | 2,25 |
| 6 | 2,82 | 3,7 | - 2 | + 10 | 145 | 300 | 2,90 | 2,80 |

* sans catalyseur de réticulation

TABLEAU V

| Exemples | Fonctionnalité et $\phi/Si$ | % OH | $T_g$ (° C) | $T_{1/2}$ (° C) | $T_R$ (° C) | Isotherme à (° C) | Δ RR.$10^2$ à 300° C | Δ RR.$10^2$ à 360° C |
|---|---|---|---|---|---|---|---|---|
| 8 | 2,62 0,10 | 2,1 | - 10 | 0 | 145 | 300 | 1,85 | 1,85 |
| 9 | 2,70 0,455 | 3,3 | 6 | 11 | 130 | 250 | 1,20 | 1,45 |
| | | | 17 | 33 | 120 | 300 | 2,65 | 2,55 |
| 10 | 2,82 0,385 | 3,7 | 14 | 24 | 130 | 250 | 1,45 | 2,00 |
| | | | 30 | 42 | 120 | 300 | 3,45 | 3,45 |
| 10 a* | 2,60 0,600 | 4,7 | 12 | 20 | 140 | 250 | 0,70 | 0,65 |
| 10 b* | 2,75 0,625 | ≈ 5 | 30 | 40 | 130 | 250 | 2,80 | 2,30 |

* 10 a - 10 b : exemples comparatifs sur des résines méthyle-phényle du commerce sans motifs disilaniques.

TABLEAU VI

| Exemples | Fonctionnalité et ϕ/Si | % OH | $T_g$ (° C) | $T_{1/2}$ (° C) | $T_R$ (° C) | Isotherme à (° C) | Δ $RR.10^2$ à 300° C | Δ $RR.10^2$ à 360° C |
|---|---|---|---|---|---|---|---|---|
| 11 | 2,64 0,20 | 4,8 | - 12 | 3 | 125 | 250 | 0,85 | 1,30 |
| 12 | 2,73 0,33 | 5,7 | 14 | 23 | 130 | 250 | 1,05 | 1,45 |
| 13 | 2,82 0,278 | 3,2 | - 3 | 12 | 150 | 250 | 1,30 | 2,30 |
| | | | - 13 | + 5 | 140 | 300 | 2,85 | 2,80 |
| 14 | 2,82 0,244 | 5,1 | 10 | 24 | 120 | 300 | 3,20 | 3,05 |
| | | | 24 | 35 | 130 | 250 | 1,45 | 2,20 |
| 15 | 2,82 0,278 | 3,6 | 12 | 38 | 130 | 250 | 1,60 | 2,15 |
| 16 | 2,82 0,377 | 5,7 | 25 | 40 | 125 | 250 | 2,0 | 2,3 |

0178191

TABLEAU VII

| Exemples | Fonction-nalité | R/Si | A $\Delta$ RR.$10^2$ à 0° C | B $\Delta$ RR.$10^2$ à 360° C | Thermo-plasticité B/A |
|---|---|---|---|---|---|
| 1 | 2,62 | 1,56 | 4,5 | 1,95 | 0,433 |
| 3 | 2,72 | 1,47 | 4,2 | 2,75 | 0,655 |
| 3 a* | 2,72 | 1,28 | 5,1 | 1,7 | 0,300 |
| 4 | 2,77 | 1,33 | 4,3 | 2,5 | 0,581 |
| 5 | 2,77 | 1,51 | 5,35 | 2,3 | 0,430 |
| 6 | 2,82 | 1,46 | 4,45 | 2,8 | 0,629 |
| 7 | 2,87 | 1,45 | 4,05 | 2,8 | 0,691 |

* 3a : exemple comparatif sur une résine méthyle du commerce sans motif disilanique.

TABLEAU VIII

| Exemple | Fonction-nalité | $\phi$/Si | A $\Delta$ RR.$10^2$ à 0° C | B $\Delta$ RR.$10^2$ à 360° C | Thermo-plasticité B/A |
|---|---|---|---|---|---|
| 8 | 2,62 | 0,1 | 4,0 | 1,8 | 0,45 |
| 9 | 2,7 | 0,45 | 8,3 | 2,55 | 0,31 |
| 10 | 2,8 | 0,38 | 8,5 | 3,45 | 0,41 |
| 10 a | 2,6 | 0,6 | 9,45 | 0,75 | 0,04 |
| 10 b | 2,75 | 0,625 | 18,4 | 2,3 | 0,125 |
| 13 | 2,82 | 0,07 | 5,6 | 2,75 | 0,49 |
| 14 | 2,82 | 0,20 | 7,5 | 3 | 0,40 |

TABLEAU IX

| Exemple | Fonctionnalité | Me/Si | % OH | Angle de goutte en ° |
|---|---|---|---|---|
| 1 | 2,62 | 1,56 | 3,6 | 82 ± 4 |
| 2 | 2,72 | 1,51 | 3,1 | 96 ± 3 |
| 2 bis | 2,72 | 1,51 | 4,9 | > 120 |
| 3 | 2,72 | 1,47 | 5,2 | > 120 |
| 3 a* | 2,72 | 1,28 | 1 | 75 ± 2 |
| 4 | 2,77 | 1,48 | 3,0 | 101 ± 2 |
| 6 | 2,82 | 1,76 | 3,7 | > 120 |
| 7 | 2,87 | 1,45 | 4,2 | > 120 |

* Exemple comparatif (cf. tableau VII)

TABLEAU X

| Exemples comparatifs | Fonctionnalité et R/Si | $Me_2Si_2Cl_4$ | Me $SiCl_3$ | $Me_2SiCl_2$ | Solvant d'hydrolyse | % d'OH (poids) | Microgels * |
|---|---|---|---|---|---|---|---|
| 17 | 2,13 1,33 | 9,1 | 54,5 | 36,4 | Toluène | 4,9 | quelques |
| 18 | 2,82 1,31 | 18,2 | 45,5 | 36,4 | Toluène | 1,7 | beaucoup |
| 19 | 2,92 1,23 | 20,0 | 52,0 | 28,0 | Toluène | 1,6 | beaucoup |
| 20** | 3,28 1,49 | 83,6 (Δ) | 0 | 16,4 | Ether diéthylique | 3,3 | beaucoup |
| 21*** | 3,53 1,24 | 100 (Δ) | 0 | 0 | Ether diéthylique | 2,5 | énormément |

* Observés en fin d'hydrolyse (filtration)
** Conformément à l'exemple 2 du brevet français 1.081.726
*** Conformément à l'exemple 5 du brevet français 1.081.726.
(Δ) mélange de disilanes.

## REVENDICATIONS

1. Procédé de préparation de résine organosilicique à motifs disilaniques, obtenue par cohydrolyse et condensation en milieu solvant hétérogène d'un mélange d'organochlorosilanes et d'organochlorodisilanes, caractérisé en ce que ledit mélange comporte :

(a) de 10 à 70 % molaire d'au moins un diorganochlorosilane de forme $R_2SiCl_2$, les radicaux R identiques ou différents étant choisis parmi un atome d'hydrogène et les radicaux méthyle et phényle

(b) de 30 à 70 % molaire d'au moins un méthylchlorodisilane comportant au moins 30 % molaire de tétrachlorodiméthyl-1,2 disilane et, en ce que le complément molaire à 100 % dudit mélange est éventuellement effectué par

(c) jusqu'à 60 % molaire d'au moins un organotrichlorosilane de formule $R'SiCl_3$, le radical R' ayant la même signification que le radical R sous (a) ci-dessus, et en ce que la résine obtenue présente en outre une fonctionnalité moyenne comprise entre environ 2,2 et 3 inclus.

2. Procédé selon la revendication 1, caractérisé en ce que R représente un radical méthyle et R' représente un radical méthyle ou phényle.

3. Procédé selon la revendication 1 ou 2, caractérisé en ce que la fonctionnalité moyenne est comprise entre 2,6 et 2,9 inclus.

4. Procédé selon l'une quelconque des revendications 1 à 3, caractérisé en ce que lors de l'hydrolyse on ajoute une quantité adaptée d'un alcool aliphatique ou d'un trialcoxysilane dont la partie alkyle est en $C_1$-$C_{12}$ en vue de réagir sur tout ou partie des silanols libres.

5. Procédé selon l'une quelconque des revendications 1 à 3, caractérisé en ce que l'on effectue une préréticulation de la résine par condensation d'une partie des silanols par chauffage à une température comprise entre 70 et 130° C, éventuellement en présence de 50 à 500 ppm (calculés en équivalent métal) d'un catalyseur métallique.

6. Procédé selon l'une quelconque des revendications 1 à 5, caractérisé en ce que les disilanes (b) sont constituées d'un mélange comportant au moins 80 % molaire d'un mélange de tétrachlorodiméthyl-1,2 disilane et de triméthyltrichloro-1,1,2 disilane.

7. Procédé selon la revendication 6, caractérisé en ce que les disilanes (b) sont constituées par la fraction des résidus de la synthèse directe distillant entre 152 et 154° C.

8. Procédé selon l'une quelconque des revendications de 1 à 5, caractérisé en ce que le constituant (c) n'est formé sensiblement que de tétrachlorodiméthyl-1,2 disilane.

9. Procédé selon l'une quelconque des revendications 1 à 3 et 6 à 8, caractérisé en ce que le taux de silanols est situé entre environ 2 et 8 % d'OH par rapport au poids total de la résine et en ce que l'hydrolyse est effectuée dans l'éther isopropylique.

10. Résine pouvant être obtenue par la mise en oeuvre d'un procédé conforme à l'une quelconque des revendications précédentes présentée sous la forme d'un solide en poudre utilisable comme poudre à mouler.

11. Résine pouvant être obtenue par la mise en oeuvre d'un procédé conforme à l'une quelconque des revendications 1 à 9, présentée sous la forme d'une solution dans un solvant organique utilisable pour l'hydrofugation des constructions.

12. Résine pouvant être obtenue par la mise en oeuvre d'un procédé conforme à l'une quelconque des revendications 1 à 9, présentée sous la forme d'une dispersion aqueuse utilisable pour l'hydrofugation des textiles.

13. Résine selon la revendication 10, 11 ou 12 caractérisée en ce qu'elle comporte en outre 20 à 500 ppm (calculés en poids d'équivalent métal par rapport au poids de résine sèche) d'un catalyseur choisi parmi un sel métallique et qu'elle réticule à une température comprise entre 280 et 320° C.

Office européen des brevets

0178191

Numero de la demande

# RAPPORT DE RECHERCHE EUROPEENNE

EP 85 40 0902

| DOCUMENTS CONSIDERES COMME PERTINENTS | | | |
|---|---|---|---|
| Catégorie | Citation du document avec indication, en cas de besoin, des parties pertinentes | Revendication concernee | CLASSEMENT DE LA DEMANDE (Int. Cl.4) |
| X | FR-A-1 081 726 (RHONE-POULENC) * Résumé, points 1,2,3; page 1, colonne de droite, paragraphes 3,4; colonne de gauche; page 3, exemple 2 * | 1,2,3 | C 08 G 77/48<br>C 08 G 77/06 |
| X | FR-A-1 023 918 (DOW CORNING) * Résumé, points A, 1-3; page 1, colonne de droite; page 2, colonne de gauche, paragraphes 2,3; page 4, exemple 2; page 6, exemples 12,13 * | 1-13 | |
| A | FR-A-1 024 086 (DOW CORNING) * Résumé, points A,1,2 * | 1 | |
| | | | DOMAINES TECHNIQUES RECHERCHES (Int. Cl.4) |
| | | | C 08 G |

Le présent rapport de recherche a été établi pour toutes les revendications

| Lieu de la recherche | Date d'achèvement de la recherche | Examinateur |
|---|---|---|
| LA HAYE | 03-09-1985 | DEPIJPER R.D.C. |

CATEGORIE DES DOCUMENTS CITES

X : particulièrement pertinent à lui seul
Y : particulièrement pertinent en combinaison avec un autre document de la même catégorie
A : arrière-plan technologique
O : divulgation non-écrite
P : document intercalaire

T : théorie ou principe à la base de l'invention
E : document de brevet antérieur, mais publié à la date de dépôt ou après cette date
D : cité dans la demande
L : cité pour d'autres raisons

& : membre de la même famille, document correspondant

OEB Form 1503 03 82